# EUROPÄISCHE PATENTSCHRIFT

(11) **EP 2 501 462 B1**
(45) Veröffentlichungstag und Bekanntmachung des Hinweises auf die Patenterteilung: **02.10.2013**
(21) Anmeldenummer: 10773294.3
(22) Anmeldetag: 26.10.2010
(51) Int. Cl.: B01D 53/56, B01D 53/86, C10B 21/10, C10B 43/10

(54) **VERFAHREN ZUR REDUZIERUNG VON STICKOXIDEN AUS DEM ABGAS EINES KOKSOFENS**
METHOD FOR REDUCING NITROGEN OXIDES FROM THE EXHAUST GAS OF A COKE OVEN
PROCÉDÉ DE RÉDUCTION D'OXYDES D'AZOTE PROVENANT DES GAZ SORTANT D'UN FOUR À COKE

(30) Priorität: 18.11.2009 DE 102009053747
(43) Veröffentlichungstag der Anmeldung: 26.09.2012
(73) Patentinhaber: ThyssenKrupp Uhde GmbH, 44141 Dortmund (DE)
(72) Erfinder: BRIX, Jörg, 45731 Waltrop (DE); HUHN, Friedrich, 40882 Ratingen (DE); KREBBER, Frank, 45130 Essen (DE)
(74) Vertreter: Albrecht, Rainer Harald
(86) Internationale Anmeldenummer: PCT/EP2010/066136
(87) Internationale Veröffentlichungsnummer: WO 2011/061042

(56) Entgegenhaltungen:
- EP-A2- 0 217 045
- DE-B- 1 206 849
- DE-B1- 2 832 397
- US-A- 2 158 710
- US-A- 4 216 060

## Beschreibung

Die Erfindung betrifft ein Verfahren zur Reduzierung von Stickoxiden aus dem Abgas eines Koksofens, der eine Mehrzahl von Verkokungskammern und zwischen den Verkokungskammern angeordnete Heizwände mit Heizzügen zur indirekten Beheizung der Verkokungskammern aufweist. In den Heizzügen wird ein Brenngas, das ganz oder teilweise aus Koksofengas besteht, verbrannt und es entsteht ein Abgas, welches Stickoxide enthält. Dem Abgas wird bei einer Temperatur zwischen 700°C und 1100°C ein Reduktionsmittel zugeführt, und durch eine homogene Gasreaktion wird zwischen dem Reduktionsmittel und den Stickoxiden der Stickoxidanteil des Abgases reduziert. Das Abgas wird anschließend durch einen Regenerator zur Wärmerückgewinnung geleitet. Die Heizzüge und der Regenerator werden dabei periodisch in aufeinander folgenden Halbperioden in entgegengesetzter Richtung durchströmt.

Ein solches Verfahren ist aus EP 0 217 045 A2 bekannt. Bei dem bekannten Verfahren wird das Reduktionsmittel in den Regeneratorinnenraum oberhalb der Besatzmaterialschichten eingesprüht oder eingeblasen,. Dazu werden Düsenlanzen aus hitzebeständigem Material verwendet. Eine gleichmäßige Verteilung des Reduktionsmittels in der Zone, in der das Abgas noch eine hohe Temperatur von beispielsweise 900 bis 1100°C aufweist, ist schwierig. Die dazu erforderliche Lanzenanordnung ist technisch aufwendig. Das mit Reduktionsmittel versetzte Abgas wird anschließend durch den Regenerator zur Wärmerückgewinnung geleitet, dessen Regeneratorbesatzmaterial wenigstens in einer Temperaturzone zwischen 200 und 500°C als Katalysator zur selektiven Reduktion der Stickoxide ausgebildet ist.

Eine Anwendung dieses Verfahrens auf die Koksofentechnik ist aus der DE 28 32 397 bekannt. Sie lehrt, Ammoniak oder ammoniakhaltiges Wasser dort in einen Regenerator einzusprühen, wo das Koksofengas eine Temperatur zwischen 700 °C und 1.100 °C hat.

In Koksöfen, deren Verkokungskammern mit einem Starkgas, z. B. Koksofengas oder einem Brenngas mit einem hohen Koksofengasanteil, beheizt wird, kommt es in den heißen Teilen der von Starkgas durchströmten Rohrleitung, insbesondere an den Brenngasdüsen zu Kohlenstoffablagerungen, die regelmäßig durch Zufuhr von Entgraphitierungsluft abgebrannt werden müssen. Es ist aus der DE 1 206 849 bekannt, die Entgraphitierungsluft in dem Zeitraum der Regenerator-Halbperiode, in dem das Starkgas in einer Brenneranordnung abgestellt ist, durch die entsprechenden Brennerzuleitungen einzuleiten.

Vor diesem Hintergrund liegt der Erfindung die Aufgabe zugrunde, Stickoxide aus dem Abgas eines Koksofens, dessen Verkokungskammern mit einem Starkgas beheizt werden, zu reduzieren. Starkgas meint in diesem Zusammenhang ein hochkalorisches Brenngas, welches ganz oder zumindest zu einem wesentlichen Teil aus Koksofengas besteht. Kohlenstoffabscheidungen sind ebenfalls zu beseitigen.

Ausgehend von dem eingangs beschriebenen Verfahren wird die Aufgabe erfindungsgemäß dadurch gelöst, dass Kohlenstoffablagerungen an heißen Teilen der Brenngaszuführung mit Entgraphitierungsluft verbrannt wird, wobei die Entgraphitierungsluft während einer Regeneratorhalbperiode, in der die Brenngaszuführung zu einem ersten Heizzug abgestellt wird, durch die zugeordnete Brennerzuleitung und Brenngasdüse in diesen ersten Heizzug eingeleitet und mit dem heißen Abgas aus einem anderen mit dem ersten Heizzug in Reihe durchströmten Heizzug abgeführt wird, und dass das Reduktionsmittel der Entgraphitierungsluft zudosiert und zusammen mit dieser mit dem heißen Abgas in Kontakt gebracht wird, wobei die Konzentration des Reduktionsmittels im Luftstrom unterhalb der Konzentration eines zündfähigen Gemisches bleibt.

Erfindungsgemäß wird das Gemisch aus Entgraphitierungsluft und Reduktionsmittel nur während der Beheizungsphasen über die Anschlussleitungen, über die für Koksofengas geschlossenen aber dann für Entgraphitierungsluft geöffneten Umstellhähne, über die Zuführungs- sowie die Düsenleitungen bzw. -kanäle sowie über die Koksofengasdüsen in die jeweils abbrennenden Heizzüge eingeleitet. Hierdurch findet im Temperaturbereich zwischen etwa 700°C und 1100°C, überwiegend zwischen etwa 900°C und 1000°C, eine homogene Gasreaktion zwischen dem Reduktionsmittel und Stickoxiden mit einer daraus resultierenden Absenkung der Stickoxide statt. Die Zugabe des Reduktionsmittels zur Entgraphitierungsluft hat zwei Vorteile. Das erfindungsgemäße Verfahren greift auf vorhandene technische Einrichtungen zurück. Die Zufuhr des Reduktionsmittels zum Gemisch mit einem Entgraphitierungsluftstrom durch vorhandene Brenngasdüsen ermöglicht eine gleichmäßige Kontaktierung und Vermischung mit dem heißen, Stickoxide enthaltenden Abgasstrom und schafft damit die Voraussetzung für eine wirkungsvolle homogene Gasreaktion.

Mittels eines Luftgebläses wird ein definierter Entgraphitierungsluftmengenstrom erzeugt. Der zu dosierende Reduktionsmittelstrom wird dann so bemessen, dass die Konzentration des Reduktionsmittels im Luftstrom unterhalb der Konzentration eines zündfähigen Gemisches bleibt.

Das zur Entgraphitierung verwendete Reduktionsmittel/Luftgemisch wird in einem Luftleitungssystem bereitgestellt, wobei das Luftleitungssystem und die Brenngaszuführung an eine Umstellarmatur angeschlossen sind und wobei durch Betätigung der Umstellarmatur wechselweise die Zuführung von Brenngas oder des Reduktionsmittel/Luftgemisches zur Brenngasdüse des Heizzuges freigegeben wird.

Der Regenerator zur Wärmerückgewinnung umfasst mehrere Einzelzellen, die unter den Heizzügen angeordnet sind. Gemäß einer bevorzugten Ausführung des erfindungsgemäßen Verfahrens enthalten zumindest die endseitigen, von außen zugänglichen Regeneratorzellen jeweils auf der Koksseite der Verkokungskammern und der Maschinenseite der Verkokungskammern Regeneratorlagen mit einem Besatzmaterial, welches in einem Temperaturbereich zwischen 200°C und 500°C als Katalysator zur selektiven Reduzierung der Stickoxide wirksam ist. Die als Katalysator wirksame Regeneratorlagen der endseitigen Regeneratorzellen werden vorzugsweise in austauschbaren Kassetten untergebracht.

Das erfindungsgemäße Verfahren lässt sich sowohl in Koksöfen einsetzen, welche als so genannte Unterbrenner konzipiert sind, als auch in so genannten kopfbeheizten bzw. als Seitenbrenner konzipierten Koksöfen. Das erfindungsgemäße Verfahren eignet sich für Koksöfen in Bergbaukokereien, die lediglich mit Starkgas betrieben werden. Das erfindungsgemäße Verfahren kann darüber hinaus aber auch bei Koksöfen zur Anwendung kommen, die im Verbund mit einem Hüttenwerk als so genannte Verbundöfen betrieben werden und sowohl mit Schwachgas als auch mit Starkgas beheizt werden können. Das erfindungsgemäße Verfahren kann immer dann eingesetzt werden, wenn Einrichtungen vorhanden sind, um Kohlenstoffabscheidungen an heißen Teilen der Brenngaszuführungen mit Entgraphitierungsluft verbrennen zu können.

Im Folgenden wird die Erfindung anhand einer lediglich ein Ausführungsbeispiels darstellenden Zeichnung erläutert. Es zeigen schematisch
- Fig. 1: das Beheizungssystem für einen Koksofen,
- Fig. 2: einen Zwillingsheizzug des in Fig. 1 dargestellten Beheizungssystems,
- Fig. 3: ein Entgraphitierungsluftsystem mit einer Dosierstation für Reduktionsmittel zur Durchführung eines Verfahrens, mit dem Stickoxide aus dem Abgas des Koksofens reduziert werden können.

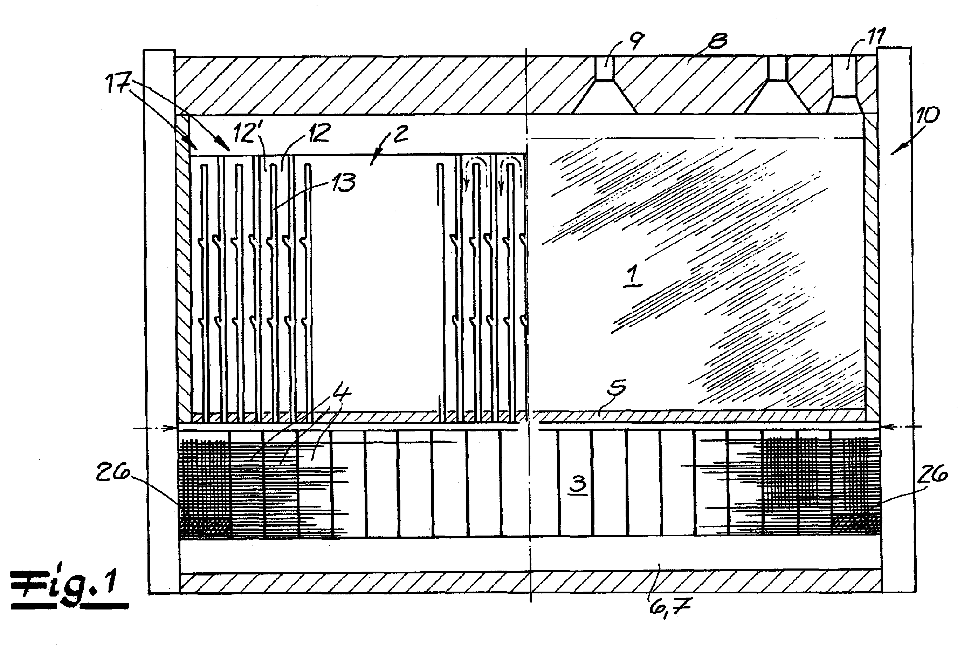

Die Fig. 1 bezieht sich auf einen Koksofen, der eine Mehrzahl von Verkokungskammern und zwischen den Verkokungskammern angeordnete Heizwände mit Heizzügen zur indirekten Beheizung der Verkokungskammern aufweist, und zeigt in unterschiedlichen Schnittebenen in der rechten Bildhälfte einen Schnitt durch eine der Verkokungskammern 1, in der linken Bildhälfte einen Schnitt durch eine Heizwand 2 sowie in der unteren Bildhälfte einen Schnitt durch den Unterofen 3 mit Regeneratoren 4 zur Wärmerückgewinnung. Die Verkokungskammern 1 sind durch eine Zwischendecke 5 von dem Unterofen 3 getrennt. Unterhalb der Regeneratoren verlaufen Sohlkanäle 6,7 für Luft und Abgas.

Die Verkokungskammern 1 des Koksofens werden von oben durch in der Ofendecke 8 angeordnete Füllöffnungen 9 befüllt. Der fertige Koks wird auf der Koksseite 10 seitlich herausgedrückt. Anfallendes Rohgas wird über Steigrohre 11 in eine Vorlage abgeführt. Zwischen den Verkokungskammern 1 befinden sich die aus hochtemperaturfesten Steinen gemauerten Heizwände 2 mit ihren Heizzügen 12, 12'. Die Trennwände 13 zwischen den Heizzügen 12 bestehen aus Hohlbindern, die Kanäle für Luft bzw. Abgas bilden und durch Öffnungen mit den Heizzügen 12 in Verbindung stehen. Am unteren Ende der Heizzüge 12 sind Brenngasdüsen 15 angeordnet, die mit einer Brenngasleitung verbunden sind. Die Brenngasleitung ist beispielsweise in der Zwischendecke 5 des Koksofens angeordnet.

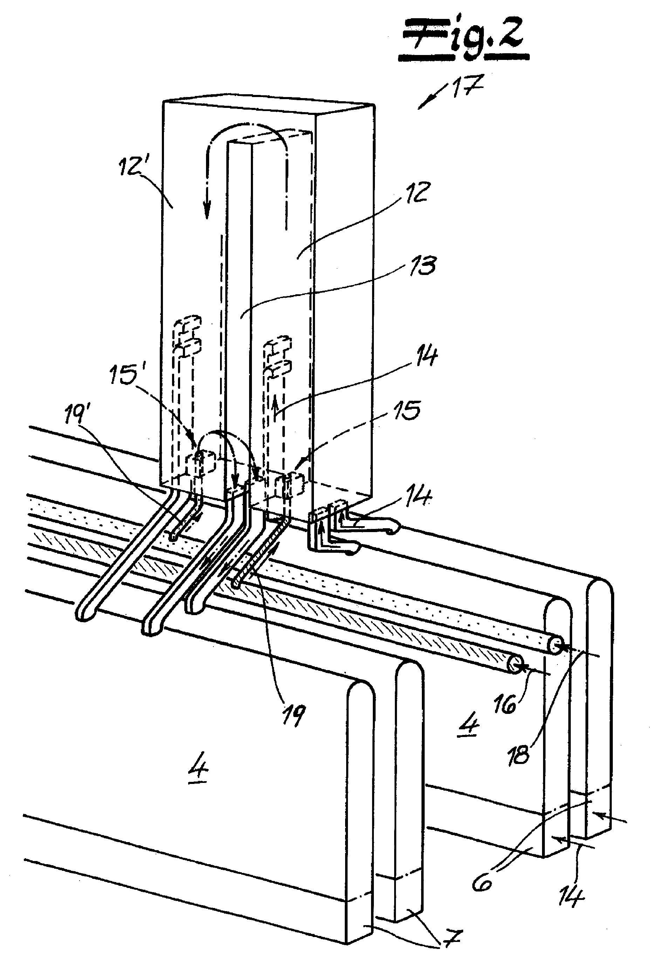

Die Heizzüge 12, 12' sind paarweise zu so genannten Zwillingsheizzügen 17 verbunden. Die Strömungsführung in einem solchen Zwillingsheizzug 17 ist in Fig. 2 dargestellt. Durch einen Sohlkanal 6 zuströmende Luft 14 wird durch Regeneratoren 4 geleitet und vorgewärmt. Die vorgewärmte Luft 14 tritt durch unterseitige Luftöffnungen sowie durch weitere, über die Höhe des Heizzuges verteilt angeordnete Öffnungen in den ersten Heizzug des Zwillingsheizzuges 17 ein. Das Brenngas 16, welches als Starkgas ganz oder zumindest zu einem wesentlichen Teil aus Koksofengas besteht, gelangt über eine Brenngasleitung zu einer dem Heizzug zugeordneten Brennerzuleitung 19 und wird durch eine am unteren Ende des Heizzuges angeordneten Brenngasdüse 15 in den Heizzug 12 eingeleitet. Dort wird das Brenngas 16 mit Sauerstoff des in den Heizzug 12 eingeleiteten Luftstromes verbrannt. Das Abgas, welches aufgrund seiner hohen Temperaturen Stickoxide enthält, tritt kopfseitig in den zweiten Heizzug 12' des Zwillingsheizzuges 17 über, durchströmt diesen abwärts und verlässt den zweiten Heizzug 12' durch dessen Luftöffnungen. Der Abgasstrom durchströmt die dem zweiten Heizzug 12' zugeordneten Regeneratoren 4, gibt an diese Wärme ab und wird mit einer Temperatur von zumeist 200°C bis 280°C und selten darüber in zugeordneten Sohlkanälen 7 abgeleitet.

Bei einer Beheizung der Verkokungskammern mit Starkgas, d. h. Koksofengas oder einem Brenngas, welches einen hohen Anteil an Koksofengas enthält, bildet sich Kohlenstoff, der sich an den heißen Teilen der von Starkgas durchströmten Rohrleitungen, insbesondere an den Brenngasdüsen 15 absetzt und regelmäßig durch Zufuhr von Entgraphitierungsluft abgebrannt werden muss. Die Entgraphitierungsluft wird während einer Regeneratorhalbperiode, in der die Brenngaszuführung zu einem Heizzug 12, 12' abgestellt wird, durch die zugeordnete Brennerzuleitung 19' und Brenngasdüse 15' in diesen Heizzug 12' eingeleitet und mit dem heißen Abgas aus dem anderen Heizzug 12 des Zwillingsheizzuges 17 abgeführt.

Um den Stickoxidgehalt des Abgases zu reduzieren, wird dabei der Entgraphitierungsluft ein Reduktionsmittel zudosiert und zusammen mit dieser mit dem heißen Abgas, welches eine Temperatur zwischen 700 °C und 1100 °C aufweist, in Kontakt gebracht. Als Reduktionsmittel wird vorzugsweise Ammoniak verwendet.

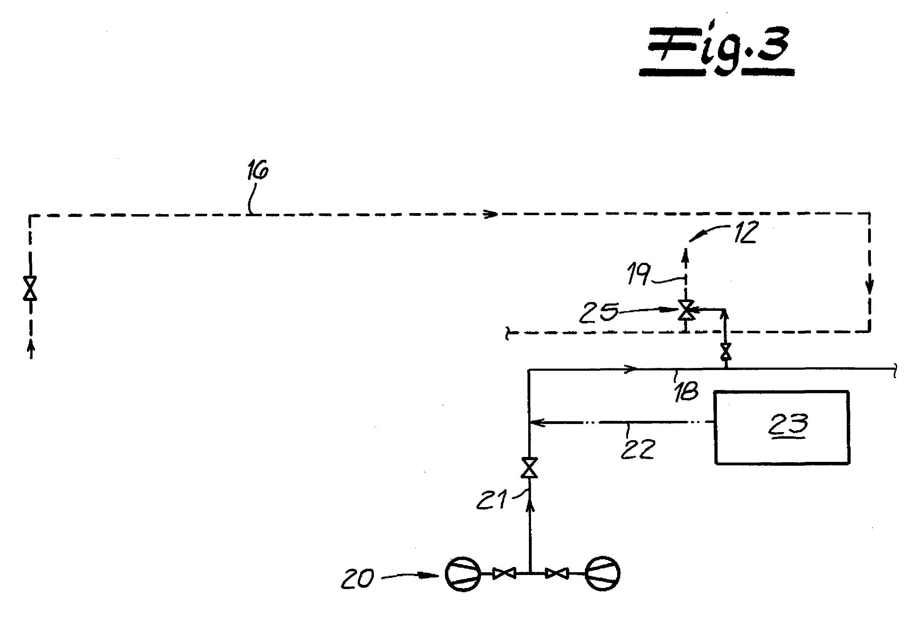

Insbesondere der Fig. 3 entnimmt man, dass mittels eines Luftgebläses 20 bzw. einer Gebläseanordnung, die auch mehrere Luftgebläse umfassen kann, ein definierter Entgraphitierungsluftmengenstrom 21 erzeugt wird und diesem ein definierter Reduktionsmittelstrom 22 zudosiert wird, dessen Menge so bemessen wird, dass die Konzentration des Reduktionsmittels im Luftstrom unter der Konzentration eines zündfähigen Gemisches bleibt. Bei der Verwendung von Ammoniak darf die maximale NH3-Konzentration im Entgraphitierungsluftstrom 2 Vol.-% betragen. Ammoniak wird dem Entgraphitierungsluftstrom dampfförmig zugeführt und in einer Verdampfungsanlage 23 erzeugt. Der Reduktionsmittelstrom 22 sowie der Luftmengenstrom 21 sind Regelgrößen eines geregelten Prozesses.

Das zur Entgraphitierung verwendete Reduktionsmittel/Luftgemisch 18 wird in einem Luftleitungssystem bereitgestellt, welches ebenso wie die Brenngaszuführung an eine als 3-Wege-Armatur ausgebildete Umstellarmatur 25 angeschlossen sind. Durch Betätigung der Umstellarmatur 25 wird wechselweise die Zuführung von Brenngas 16 oder des Reduktionsmittel/Luftgemisches 18 zur Brenngasdüse 15 des Heizzuges 12 freigegeben.

In Fig. 1 wurde angedeutet, dass zur Wärmerückgewinnung ein mehrere Einzelzellen umfassender Regenerator 4 verwendet wird, wobei die Einzelzellen unter den Heizzügen angeordnet sind. Zumindest die endseitigen, von außen zugänglichen Regeneratorzellen enthalten jeweils auf der Koksseite der Verkokungskammern und der Maschinenseite der Verkokungskammern Regeneratorlagen 26 mit einem Besatzmaterial, welches in einem Temperaturbereich zwischen 200 °C und 500 °C als Katalysator zur selektiven Reduktion der Stickoxide wirksam ist. Die als Katalysator wirkende Regeneratorlagen 26 der endseitigen Regeneratorzellen werden in austauschbaren Kassetten untergebracht.

## Patentansprüche

1. Verfahren zur Reduzierung von Stickoxiden aus dem Abgas eines Koksofens, der eine Mehrzahl von Verkokungskammern (1) und zwischen den Verkokungskammern angeordnete Heizwände (2) mit Heizzügen (12, 12') zur indirekten Beheizung der Verkokungskammern (1) aufweist,
wobei in den Heizzügen (12, 12') ein Brenngas, das ganz oder teilweise aus Koksofengas besteht, verbrannt wird und ein Abgas entsteht, welches Stickoxide enthält,
wobei dem Abgas bei einer Temperatur zwischen 700°C und 1.100°C ein Reduktionsmittel (22) zugeführt und durch eine homogene Gasreaktion zwischen dem Reduktionsmittel und den Stickoxiden der Stickoxidanteil des Abgases reduziert wird ,
wobei das Abgas anschließend durch einen Regenerator (4) zur Wärmerückgewinnung geleitet wird und
wobei die Heizzüge und der Regenerator periodisch in aufeinander folgenden Halbperioden in entgegengesetzter Richtung durchströmt werden,
**dadurch gekennzeichnet, dass** Kohlenstoffablagerungen an heißen Teilen der Brenngaszuführung mit Entgraphitierungsluft (21) verbrannt wird, wobei die Entgraphitierungsluft während einer Regeneratorhalbperiode, in der die Brenngaszuführung zu einem ersten Heizzug (12') abgestellt wird, durch die zugeordnete Brennerzuleitung (19') und Brenngasdüse (15') in diesen ersten Heizzug (12') eingeleitet und mit dem heißen Abgas aus einem anderen mit dem ersten Heizzug (12') in Reihe durchströmten Heizzug (12) abgeführt wird, und dass das Reduktionsmittel (22) der Entgraphitierungsluft (21) zudosiert und zusammen mit dieser mit dem heißen Abgas in Kontakt gebracht wird, wobei die Konzentration des Reduktionsmittels (22) im Luftstrom (21) unterhalb der Konzentration eines zündfähigen Gemisches bleibt.

2. Verfahren nach Anspruch 1, **dadurch gekennzeichnet, dass** als Reduktionsmittel (22) Ammoniak verwendet wird.

3. Verfahren nach Anspruch 1 oder 2, **dadurch gekennzeichnet, dass** ein definierter Entgraphitierungsluftmengenstrom (21) mittels eines Luftgebläses (20) erzeugt wird.

4. Verfahren nach einem der Ansprüche 1 bis 3, **dadurch gekennzeichnet, dass** das zur Entgraphitierung verwendete Reduktionsmittel/Luftgemisch (18) in einem Luftleitungssystem bereitgestellt wird, wobei das Luftleitungssystem und die Brenngaszuführung an eine Umstellarmatur (25) angeschlossen sind und wobei durch Betätigung der Umstellarmatur (25) wechselweise die Zuführung von Brenngas oder des Reduktionsmittel/Luftgemisches zur Brenngasdüse (15') des Heizzuges (12') freigegeben wird.

5. Verfahren nach einem der Ansprüche 1 bis 4, **dadurch gekennzeichnet, dass** ein mehrere Einzelzellen umfassender Regenerator (4) zur Wärmerückgewinnung verwendet wird, wobei die Einzelzellen unter den Heizzügen (12, 12') angeordnet sind und wobei zumindest die endseitigen, von außen zugänglichen Regeneratorzellen jeweils auf der Koksseite der Verkokungskammern (1) und der Maschinenseite der Verkokungskammern Regeneratorlagen (26) mit einem Besatzmaterial enthalten, welches in einem Temperaturbereich zwischen 200°C und 500°C als Katalysator zur selektiven Reduktion der Stickoxide wirksam ist.

6. Verfahren nach Anspruch 5, **dadurch gekennzeichnet, dass** die als Katalysator wirksamen Regeneratorlagen (26) der endseitigen Regeneratorzellen in austauschbaren Kassetten untergebracht werden.

## Claims

1. A method for reducing nitrogen oxides from the exhaust gas of a coke oven, comprising a plurality of coking chambers (1) and heating walls (2) with heating gas passes (12, 12') disposed between the coking chambers for indirect heating of the coking chambers (1)
wherein a fuel gas consisting partly or entirely of coke oven gas is combusted in the heating gas passes (12, 12') and an exhaust gas containing nitrogen oxides is formed,
wherein a reducing agent (22) is introduced into the exhaust gas at a temperature between 700 °C and 1100 °C and the nitrogen oxide component of the exhaust gas is reduced by a homogeneous gas reaction between the reducing agent and the nitrogen oxides,
wherein the exhaust gas is then passed through a regenerator (4) for purposes of heat recovery,
wherein the gas is passed through the heating gas passes and the regenerator in alternating cycles and in opposite directions,
**characterized in that** the carbon deposits on hot parts of the fuel gas feed are burned with degraphiting air (21), wherein during a regenerator cycle, in which the fuel gas feed to a first heating gas pass (12') is stopped, the degraphiting air is introduced into said first heating gas pass (12') through the allocated burner supply (19') and fuel gas nozzle (15'), and discharged together with the hot exhaust gas from another heating gas pass (12) which is connected in series with the first heating gas pass (12') and through which gas is forwarded, and that the reducing agent (22) is added to the degraphiting air (21) in metered quantities and together therewith brought into contact with the hot exhaust gas, wherein the concentration of the reducing agent (22) in the air stream (21) remains below the concentration of an ignitable mixture.

2. The method according to claim 1, **characterized in that** ammonia is used as the reducing agent (22).

3. The method according to claim 1 or 2, **characterized in that** a defined stream of degraphiting air (21) is produced by means of an air blower (20).

4. The method according to any of claims 1 to 3, **characterized in that** the reducing agent/air mixture (18) used for degraphiting is supplied in an air duct system, wherein the air duct system and the fuel gas feed are connected to a changeover fitting (25), and wherein the feed of fuel gas or the reducing agent/air mixture to the fuel gas nozzle (15') of the heating gas pass (12') is enabled in alternating sequence by operating the changeover fitting (25).

5. The method according to any of claims 1 to 4, **characterized in that** a regenerator (4) comprising multiple single cells is used for heat recovery, wherein the single cells are arranged underneath the heating gas passes (12, 12'), and wherein at least the end regenerator cells, which are accessible from the outside, contain layers (26) of regenerator material on the respective coke side of the coking chambers (1) and the machine side of the coking chambers, which layers have a filling material that is effective for selectively reducing nitrogen oxides in a temperature range between 200 °C and 500 °C.

6. The method according to claim 5, **characterized in that** the regenerator material layers (26) in the end regenerator cells that function as catalysts are accommodated in replaceable cassettes.

## Revendications

1. Procédé destiné à réduire les oxydes azotiques dans les gaz de fumée d'un four à coke qui comporte une pluralité de chambres de cokéfaction (1) et des parois chauffantes (2) disposées entre les chambres de cokéfaction avec des carneaux de chauffage (12, 12') pour le chauffage indirect des chambres de cokéfaction (1),
lors duquel il est brûlé dans les carneaux de chauffage (12, 12') un gaz de chauffage, constitué totalement ou en partie de gaz de cokerie et il se produit un gaz de fumée qui contient des oxydes azotiques,
lors duquel un agent réducteur (22) est amené au gaz de fumée à une température comprise entre 700°C et 1.100°C et par une réaction gazeuse homogène entre l'agent réducteur et les oxydes azotiques, la part d'oxydes azotiques est réduite dans le gaz de fumée,
lors duquel le gaz de fumée est ensuite dirigé à travers un régénérateur (4) pour la récupération de la chaleur et
lors duquel les carneaux de fumée et le régénérateur sont traversés périodiquement dans des demi-périodes successives en direction opposée,
**caractérisé en ce que** des dépôts de carbone sont brûlés sur des parties chaudes de l'alimentation en gaz combustible avec de l'air de décalaminage (21), pendant l'une des demi-périodes du régénérateur, pendant laquelle l'alimentation en gaz combustible vers un premier carneau de fumée (12') est arrêtée, l'air de décalaminage est introduit à travers le conduit d'alimentation du brûleur (19') associé et la buse de gaz de combustion (15') dans ledit carneau de fumée (12') et évacué avec le gaz de fumée chaud hors d'un autre carneau de fumée (12) traversé en série avec le premier carneau de fumée (12') et **en ce que** l'agent réducteur (22) est ajouté par dosage à l'air de décalaminage (21) et amené ensemble avec celui-ci en contact avec le gaz de fumée chaud, la concentration en agent réducteur (22) dans le flux d'air (21) restant inférieure à la concentration d'un mélange inflammable.

2. Procédé selon la revendication 1, **caractérisé en ce qu'**on utilise de l'ammoniac en tant qu'agent réducteur (22).

3. Procédé selon la revendication 1 ou la revendication 2, **caractérisé en ce qu'**on créé un flux volumétrique d'air de décalaminage(21) défini au moyen d'une soufflerie d'air (20).

4. Procédé selon l'une quelconque des revendications 1 à 3, **caractérisé en ce qu'**on prépare le mélange agent réducteur/air (18) utilisé pour le décalaminage dans un système de conduction d'air, le système de conduction d'air et l'alimentation en gaz de combustion étant raccordés sur une robinetterie d'inversion (25) et par actionnement de la robinetterie d'inversion (25), alternativement, l'alimentation de gaz de combustion ou du mélange agent réducteur/air étant libéré vers la buse de gaz de combustion (15') du carneau de fumée (12').

5. Procédé selon l'une quelconque des revendications 1 à 4, **caractérisé en ce qu'**on utilise pour la récupération de chaleur un régénérateur (4) comprenant plusieurs cellules individuelles, les cellules individuelles étant disposées en-dessous des carneaux de fumée (12, 12') et au moins les cellules d'extrémité du régénérateur accessibles par l'extérieur contenant chacune sur le côté d'extinction du coke des chambres de cokéfaction (1) et sur le côté machine des chambres de cokéfaction des couches de régénérateur (26) avec une matière de charge qui devient active en tant que catalyseur dans un ordre de température compris entre 200°C et 500°C pour la réduction sélective des oxydes azotiques.

6. Procédé selon la revendication 5, **caractérisé en ce que** les couches de régénérateur (26) actives en tant que catalyseur sont logées dans les cellules d'extrémité du régénérateur, dans des cassettes interchangeables.
